# EUROPEAN PATENT APPLICATION

(11) **EP 1 352 700 A2**
(43) Date of publication of application: **15.10.2003**
(21) Application number: 03252174.2
(22) Date of filing: 05.04.2003
(51) Int. Cl.: B23K 11/31

(54) **Weld gun assembly**

(30) Priority: 08.04.2002 US 370816 P
(71) Applicant: Progressive Tool & Industries Company, Southfield, MI 48034 (US)
(72) Inventor: Kilibarda, Velibor, Birmingham, Michigan 48009 (US); Mannix, Fred A., Walled Lake,Michigan 48390 (US); Hendricks, Ronald R., Sterling Heights, Michigan 48314 (US)
(74) Representative: Spoor, Brian

(57) **Abstract**

A weld gun for performing a welding operation on a workpiece includes a pair of opposing arms, at least one arm movable relative to the opposing arm to apply pressure to the workpiece during a welding operation. A pair of identical or mirror image side plates support components of the weld gun to establish critical dimensions of the components relative to one another, while preventing tolerance buildup of critical dimensions at critical points. A guide block is connected to one of the opposing arms. The guide block has a non-circular aperture formed therein. An electrode adapter has a non-cylindrical rod portion slidably received in the non-circular aperture formed in the guide block for preventing rotation of the electrode adapter. A hose fitting is attachable directly to a rear end of the electrode adapter for communicating with an inlet water port and an outlet water port formed in the electrode adapter for providing a routing of coolant directly through the electrode adapter only.

## Description

This application is a continuation of U.S. Serial No. 60/370,816 filed on April 8, 2002, which is incorporated by reference herein in its entirety.

This invention relates to weld guns and more particularly to weld guns especially suitable for use in industrial automotive applications.

Weld guns are in common usage in many industrial applications and in particular in automotive applications. Whereas a myriad of weld gun designs have been proposed and/or utilized commercially, there is still a need for a simpler weld gun design, providing a less expensive cost of assembly; for a weld gun design that is easier to service, thereby reducing servicing costs; and for a weld gun design that provides a longer life, thereby reducing replacement costs.

The invention will now be described by way of example with reference to the accompany drawings in which like reference numerals refer to like parts throughout the several views, and in which

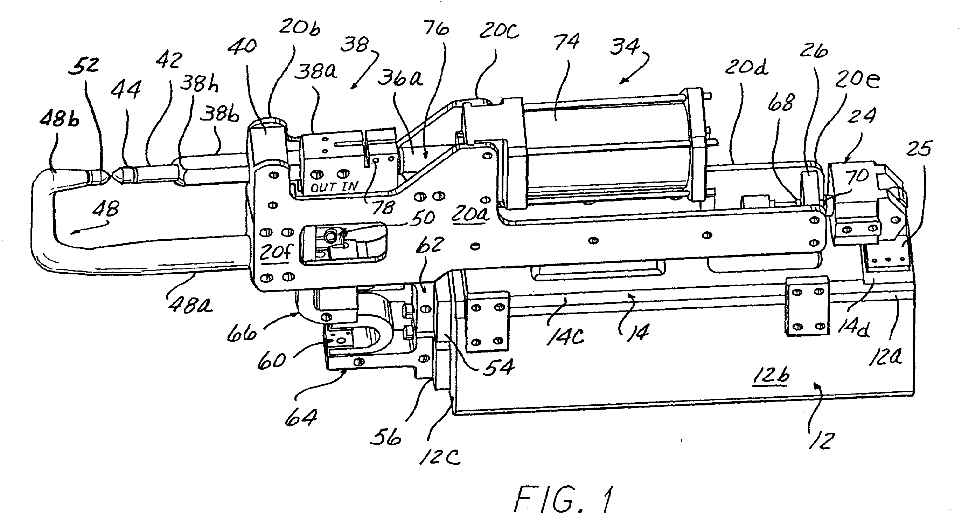

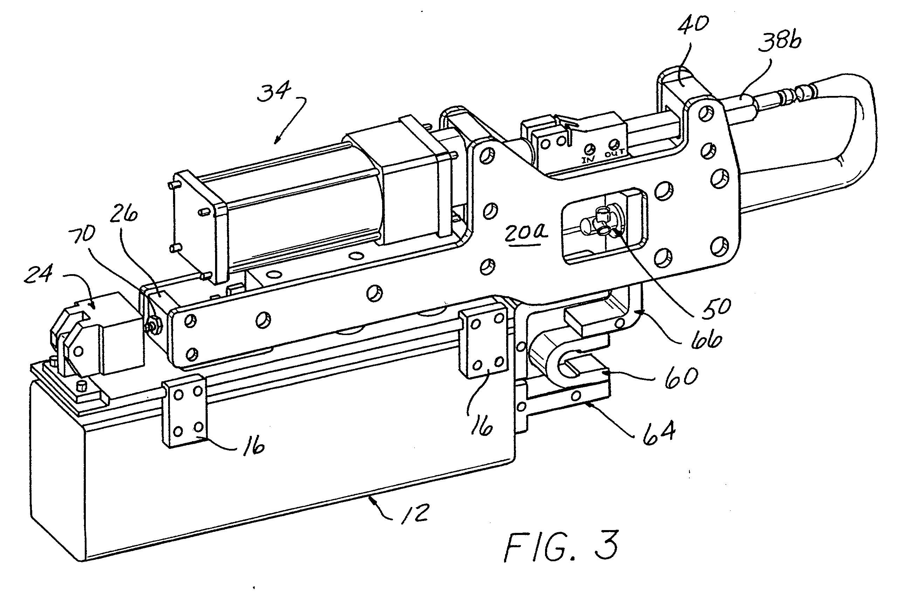

Figures 1, 2 and 3 are perspective views of the weld gun according to the present invention;

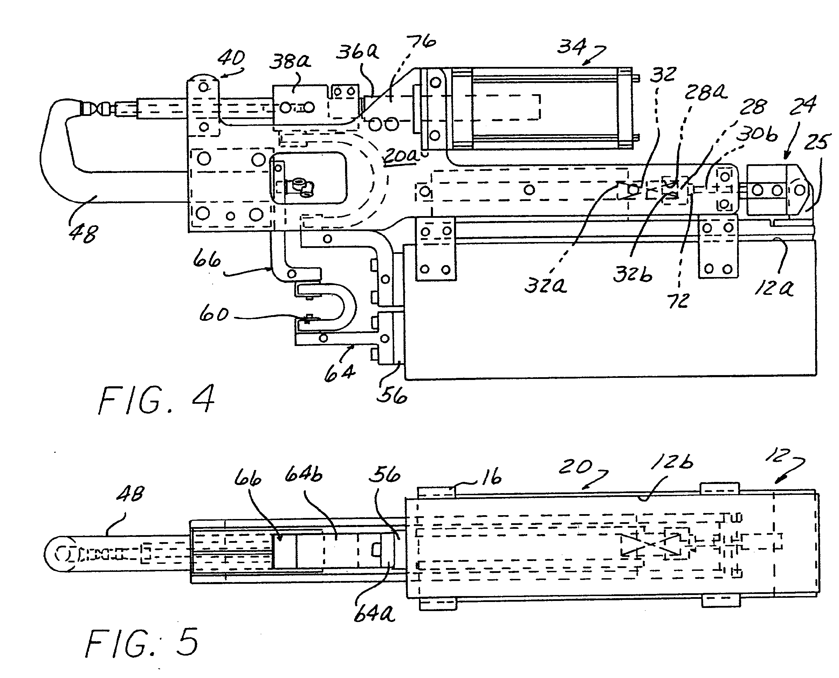

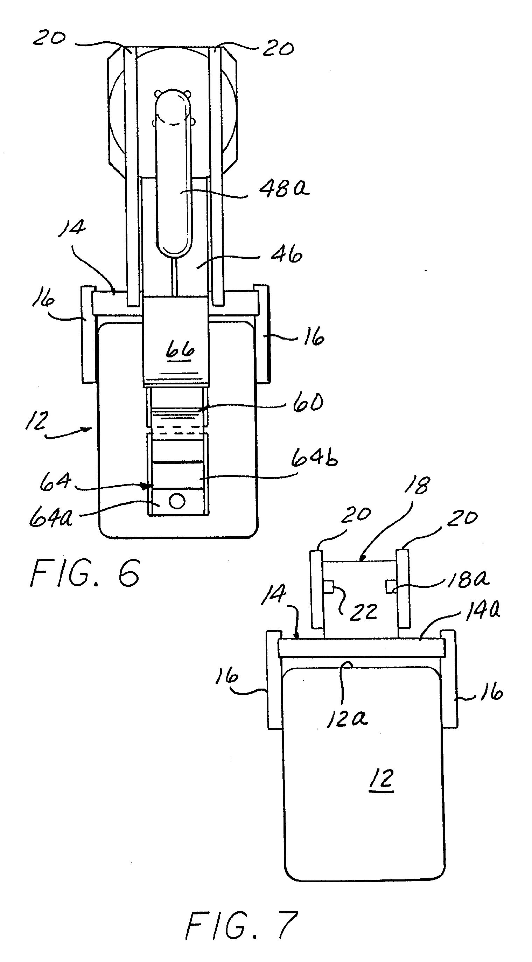

Figures 4, 5 and 6 are elevational, plan, and end views of the weld gun according to the present invention;

Figure 7 is a cross-sectional view of the weld gun according to the present invention;

Figures 8 and 9 are fragmentary perspective views of the weld gun according to the present invention;

Figures 10 and 11 are elevational and plan views of side plates used in the weld gun according to the present invention;

Figures 12 and 13 are plan and elevational views of a base plate used in the weld gun according to the present invention;

Figures 14, 15, and 16 are elevational, plan, and end views of a cap adapter used in the weld gun according to the present invention;

Figures 17-35 are perspective views of component parts of the weld gun according to the present invention;

Figure 36, 37 and 38 are plan, elevational, and end views of an electrode adapter used in the weld gun according to the present invention; and

Figure 39 is a perspective view of a servo motor optionally utilizable in the weld gun of the present invention.

A weld gun assembly 10 according to the invention can include the following illustrated major component parts: a transformer 12; a base plate 14; at least one transformer mounting strap 16; a slide block 18; at least one side plate 20; at least one rail 22; a positioning cylinder 24; a clevis bracket 25; a spring lock 26; a spring cup 28; a threaded rod 30; an equalizing spring 32; a power cylinder 34; an electrode adapter 38; a guide block 40; a moveable cap adapter 42; a first cap 44; an electrode holder 46; a stationery cap adapter 48; a hose fitting 50; a second cap 52; at least one transformer terminal 54, 56; at least one shunt 58, 60; at least one shunt adapter 62, 64, 66; at least one nut 68, 70, 72; and a cooling tube 80.

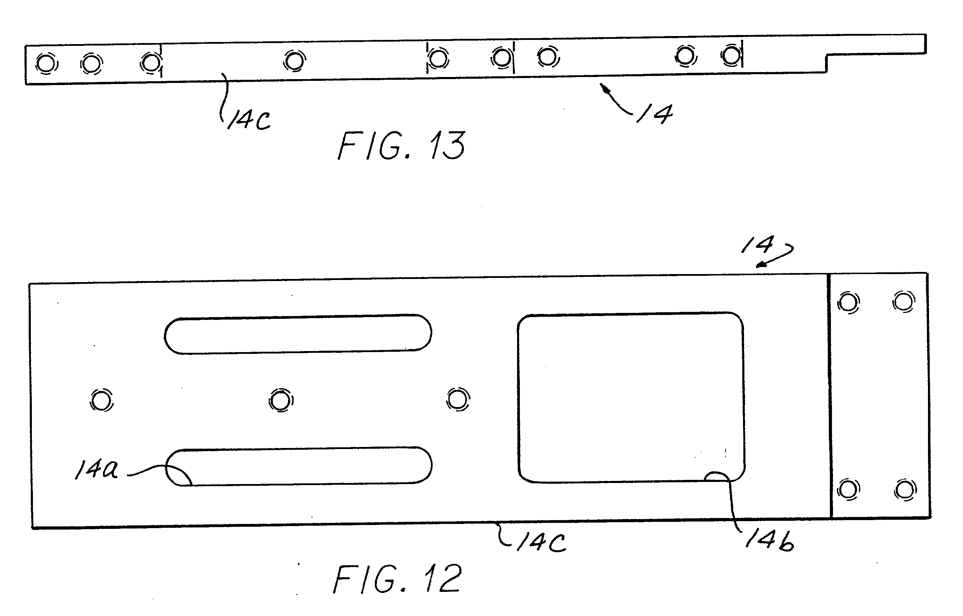

Main body transformer 12 is of known form and can have a monolithic rectangular configuration including a top face 12a and side faces 12b. Base plate 14 (Figures 12 and 13) can have a rectangular configuration generally corresponding to the configuration and dimensions of the top face 12a of the transformer 12. Base plate 14 can include a pair of slots 14a proximate the front end of the plate 14 and a rectangular opening 14b proximate the rear end of the plate 14. Transformer mounting straps 16 (Figure 28) can be fixedly secured to the side face 12b of the transformer 12 and can include a notch 16a proximate the upper end of the strap 16 receiving a side edge 14c of the base plate 14 so as to mount the base plate 14 in overlying relation to the upper face 12a of the transformer 12 but spaced from the upper face 12a.

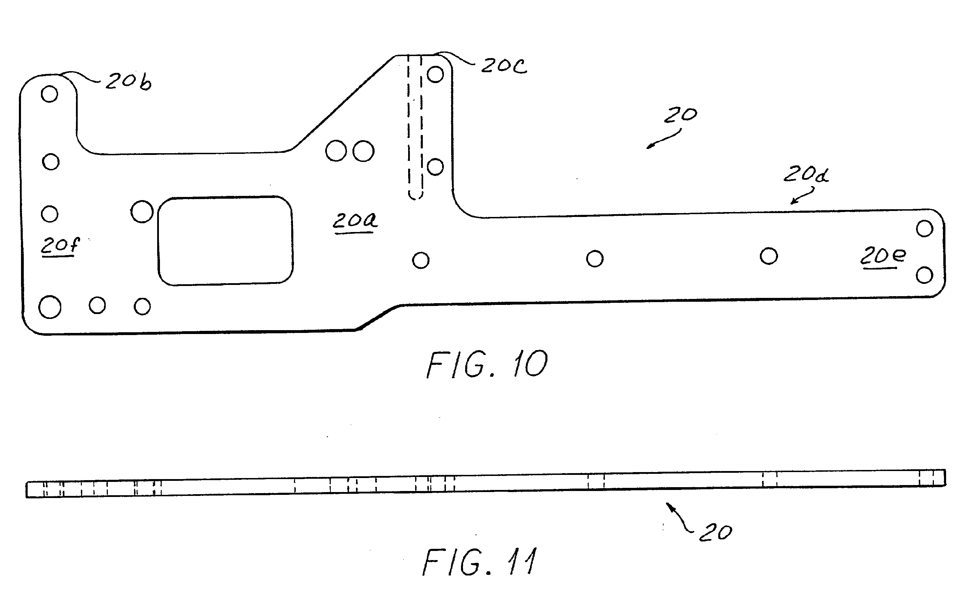

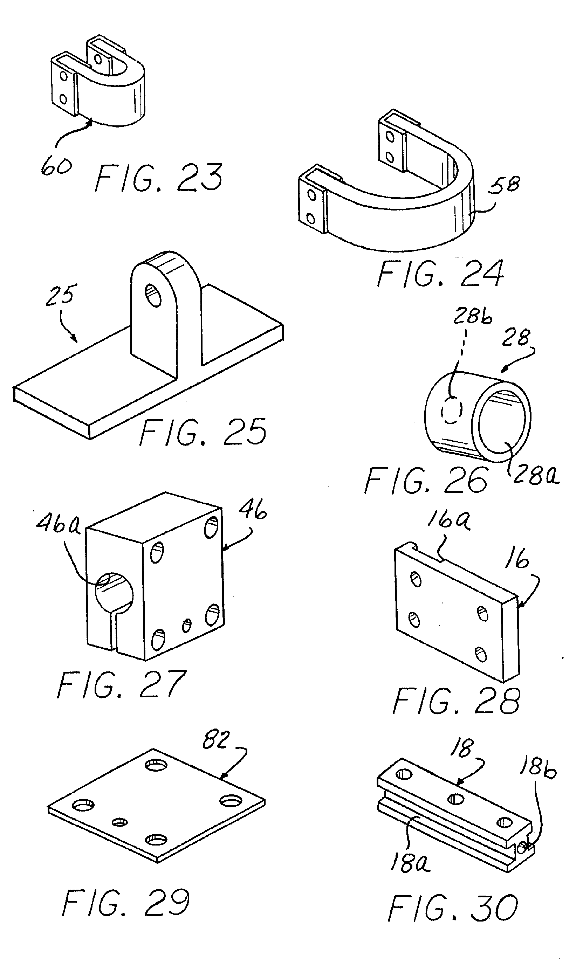

Slide block 18 (Figure 30) can have an "H" shaped cross-sectional configuration defining opposed longitudinal guide grooves or keyways 18a. Slide block 18 is fixed to the upper face of base plate 14. Slide block 18 can be formed of aluminum and can include chrome plated equalizing keyways. Side plates 20 (Figures 10 and 11) can be identical to one another and disposed on opposite sides of the slide block 18. Each side plate 20 can include a main body portion 20a, a front pedestal portion 20b, an intermediate pedestal portion 20c, and a rear strap portion 20d terminating in a rear end 20e. Side plates 20 can preferably be formed of stainless steel. Rails 22 can be secured to the inboard faces of strap portions 20d and can be slidably received in the opposed keyways 18a of slide block 18 to mount the side plates 20 for sliding equalizing movement on the slide block 18.

Positioning cylinder 24 can be carried by clevis bracket 25 which in turn can be mounted on a reduced thickness platform mounting portion 14d at the rear of base plate 14. Spring block 26 can be positioned between the rear ends 20e of side plates 20 to fixedly interconnect the rear ends of the side plates. Spring cup 28 (Figure 26) can have a generally cup shaped configuration and can define a socket 28a sized to receive one end of spring 32.

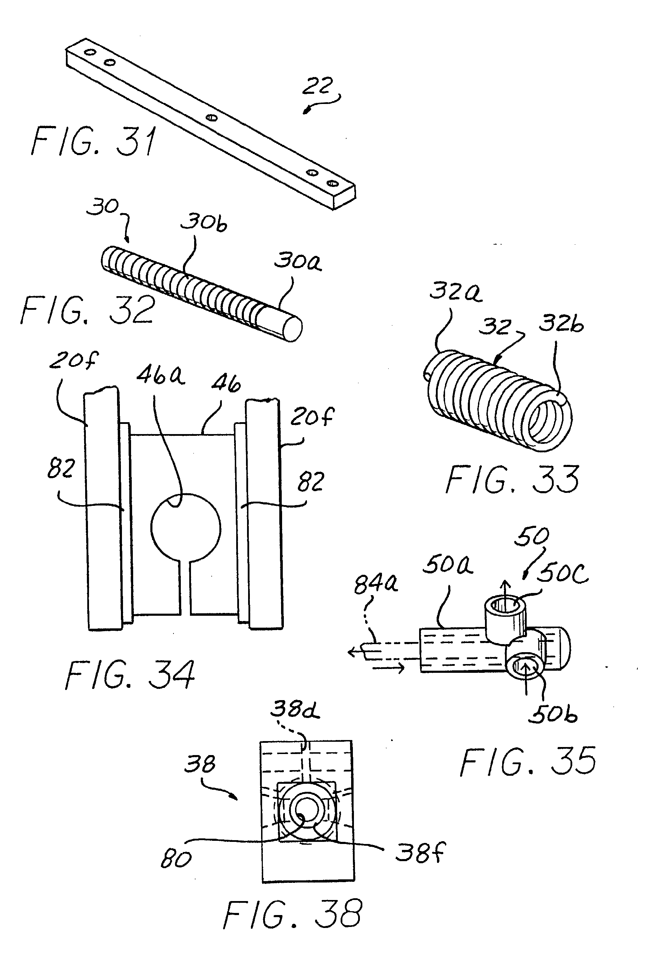

Threaded rod 30 (Figure 32) can be fixedly secured at its rear end 30a to the piston of positioning cylinder 24 and can include a threaded portion 30b extending forwardly through a central aperture 26a in spring block 26 and through a central aperture 28b in the rear wall of spring cup 28. Nuts 68, 70 can be received on threaded portion 30b and can engage opposite side faces of spring block 26 to lock the spring block with respect to the threaded rod. A further nut 72 can be received on threaded portion 30b and can engage the rear wall of the spring cup 28 to adjustably mount the spring cup on the forward end of the threaded rod 30. Equalizer spring 32 can have a coil configuration and can be received at its front end 32a in a socket 18b in the rear face of slide block 18 and at its rear end 32b in the socket 28a of spring cap 28.

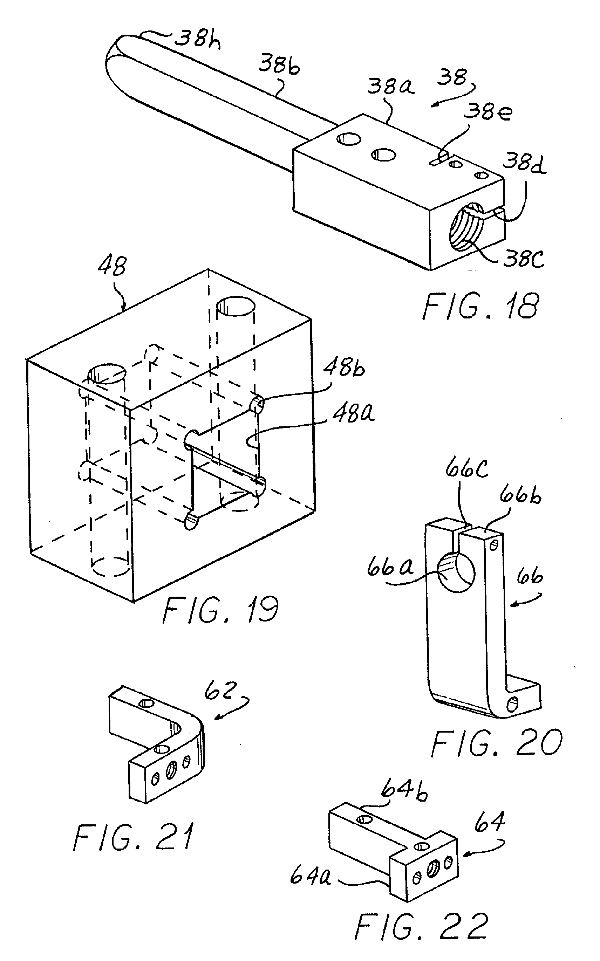

Power cylinder 34 can preferably be an air cylinder and can include a cylinder body 74 slidably mounting a piston (not shown), and a piston rod 36. The forward end 74a of the cylinder 74 can be fixedly mounted between the pedestal portions 20c of spaced side plates 20. Electrode adapter 38 (Figure 18, 35, 36 and 37) can include a monolithic, generally rectangular main body rear portion 38a and a forward rod portion 38b of rectangular cross-section. Main body portion 38a can include a socket 38c at its rear end receiving the front end 36a of piston rod 36. Main body portion 38a can be split at 38d and 38e to facilitate the grasping of the front end 36a of the piston rod 36 using fasteners 78. Adapter 38 can include a longitudinal bore 38f communicating with a transverse "in" bore 38g and a counterbore 38h communicating with a transverse "out" bore 38i. A tube 80 can be positioned in bore 38f to communicate with "in" bore 38g. Guide block 40 (Figure 19) can be fixedly positioned between pedestal portions 20b of the spaced side plates 20 and can slidably receive the rod portion 38b of electrode adapter 38 via a square central passage 48a drilled at the corners 48b to facilitate the sliding movement of rod portion 38b in the guide block. Moveable cap adapter 42 can be fixedly mounted on the front end 38j of the rod portion 38b of electrode adapter 38 and first welding cap 44 can be fixedly positioned on the front end of the cap adapter 42.

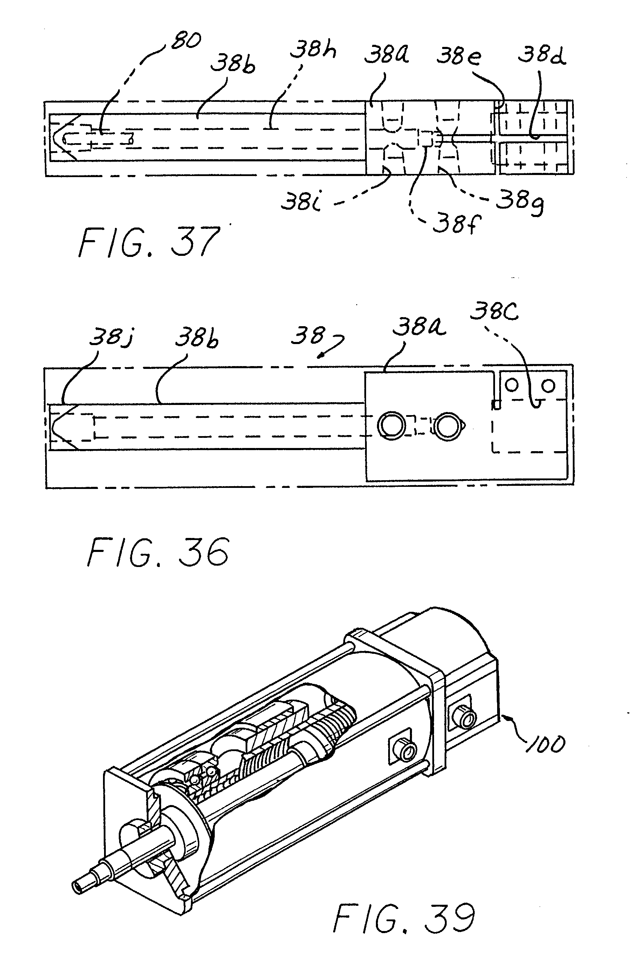

It should be understood that, in known manner, the cooling tube 80 (Figure 36) can extend forwardly through cap adapter 42 and into proximity with welding cap 44 and can be positioned in spaced relation to an interior bore of adapter 42 allowing cooling fluid to flow through "in" port 38g and through cooling tube 80 and into proximity with cap 44, whereafter the cooling fluid can leave the cap and flow around the cooling tube back through adapter 42 and rod portion 38b for discharge through "out" port 38i.

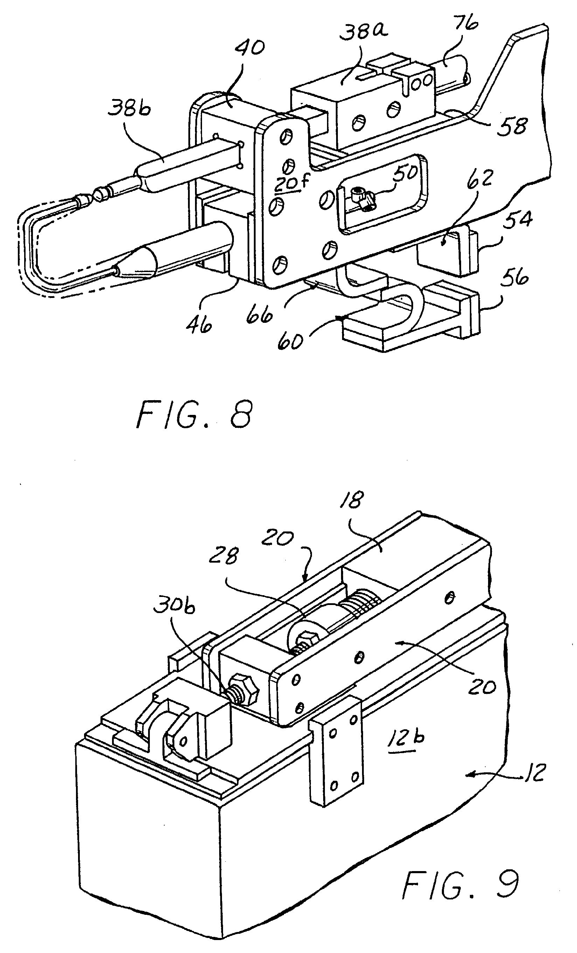

Electrode holder 46 (Figure 27) can have a generally rectangular configuration and can be fixedly positioned between the front ends 20f of side plates 20 beneath holder 40. Electrode holder 46 can define a central aperture 46a for fixed receipt of stationary cap adapter 48. As seen in Figure 8, electrode holder 46 can preferably be sandwiched between insulator plates 82 (Figure 29) which can be formed for example of a mica or similar insulating material.

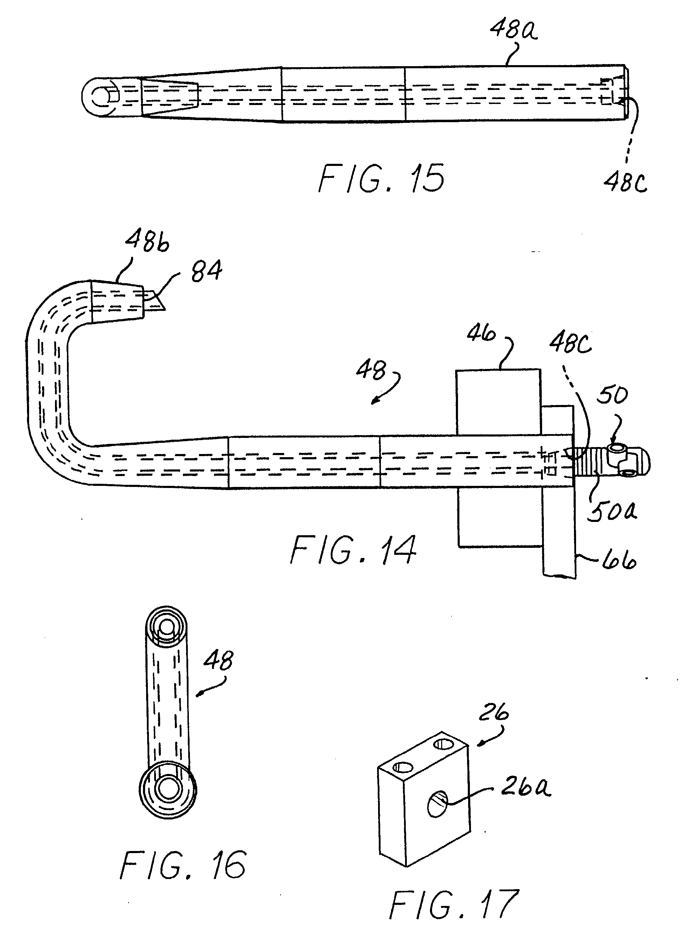

Stationary cap adapter 48 (Figures 14, 15 and 16) can be shaped depending on the particular gun configuration being employed. In the illustrated configuration of the welding gun, adapter 48 can have a tubular U-shaped configuration with a rear end 48a of the adapter positioned in and passing through the aperture 46a of electrode holder 46 and the other end 48b of the adapter 48 mounting the second welding cap 52. A central tube 84 can be positioned within a central bore 48c of adapter 48 and can extend through the adapter so as to provide, in known manner, means for introducing cooling fluid into the adapter for delivery to the welding cap and means for returning cooling fluid outside of the tube back to a cooling fluid discharge.

Hose fitting 50 (Figures 14 and 35) can include a threaded forward end 50a adapted to be threadably received in a threaded bore 48c in the rear end 48a of adapter 48 and can further include an "in" port 50b and an "out" port 50c. It should be understood that "in" port 50b can be configured to communicate with cooling tube 84 proximate the rear end 84a of that tube and "out" port 50c can be configured to communicate with an annular area outside of the tube end 84a to receive the return fluid flow.

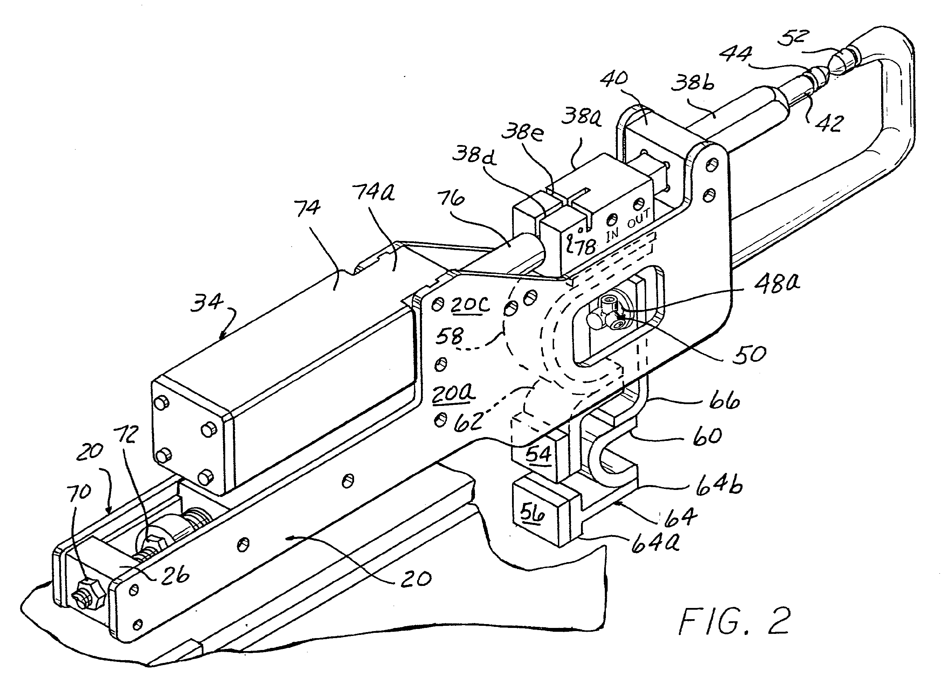

Transformer 12, in known manner, can include terminals 54 and 56 positioned on the front face 12c of the transformer. Shunt adapter 62 (Figures 8 and 21) can have an L-shaped configuration and can be fixedly and electrically secured to the front face of terminal 54. Shunt 58 (Figures 2 and 24) can have a U-shaped configuration and can extend between adapter 62 and the underface of the main body portion 38a of electrode adapter 38. It can be seen that adapter 62 and shunt 58 can coact to provide an electrical flow path from transformer terminal 54 to electrode holder 38 to deliver electric power to welding cap 44.

Shunt 58 can be of the laminated copper type and should be understood to provide flexibility as between the connection with the adapter 62 and the underface of block 38a. Adapter 64 (Figures 2 and 22) can have a T-shaped configuration including a T-bar portion 64a fixedly and electrically secured to transformer terminal 56 and a stem portion 64b. Adapter 66 (Figures 2 and 20) can have an L-shaped configuration and can define a central aperture 66a proximate the upper end 66b of the adapter. Aperture 66a can be intended to fit over the rear end 48a of adapter 48 as the rear end 48a projects rearwardly beyond the rear face of holder 46. The upper end of the adapter 66 can be fixedly secured to the rear end 48a of adapter 48 using a suitable fastener coacting with a split 66c to facilitate the squeezing engagement of adapter 66 with the rear end 48a of the adapter 48. This arrangement can allow the hose fitting 50 to readily and threadably access the rear end of adapter 48 without interference from the upper end of adapter 66 and without interference from electrode holder 46. Shunt 60 (Figures 8 and 23) can electrically interconnect adapter 66 and adapter 64 and, in known matter, can have a laminated copper construction to provide a flexible electrical interconnection between terminal 56 and welding cap 52 via adapter 64, shunt 60, adapter 66, and adapter 48.

In typical operation of the welding gun according to the present invention, the gun can be attached to a robot (as for example by attaching the robot to the side face 12b of the transformer); gross adjustment of the overall welding gun can be performed using the robot; fine adjustment of the overall welding gun can be performed using positioning cylinder 24; and adjustment of the space or gap between the welding caps 52/54 to grip the item to be welded can be achieved using power cylinder 34 in combination with equalizing spring 32. Specifically, once the caps of the open gun have been positioned on opposite sides of the article to be welded, power cylinder 34 can be fired to bring cap 44 into engagement with one face of the article whereafter continued extending movement of piston rod 36 allows equalizing spring 32 to act to bring the cap 52 into engagement with the other face of the article to be welded.

The welding gun according to the present invention can provide many important advantages as compared to prior known welding guns. The square rod portion 38b of the electrode adapter can be slidably received in the square opening in the guide block 40 to preclude unwanted rotation of the electrode adapter. The design allows the ready interchange of the power cylinder 34 with a servo motor, such as for example the servo motor 100 shown in Figure 39. The use of the identical side plates 20 to establish all of the critical dimensions of the components of the gun can insure that tolerances will be maintained on all of the critical dimensions and at all of the critical points. The use of the identical side plates 20 further can simplify reconfiguration of the gun since the shape and configuration of the side plates can be changed to accommodate a different welding requirement while continuing to use much of the same components of the welding gun in the new configuration. The rod portion 38b of the adapter 38 can be chrome treated to enhance work characteristics and reject weld splatter. The use of insulating plates 82 to embrace the electrode holder 46 can allow a metal to metal configuration at the arm engagement and the holder to prevent rotation of the arm under usage. The design can allow dual attachment points of the electrode adapter or shunt adapter to allow for a new attachment point after a wear failure or electrical arcing failure. The use of the hose fitting 50 attached directly to the rear end of electrode adapter 48 for coaction with tube 84 can simplify the connection of the inlet water and the outlet water to the electrode adapter 48 and specifically avoids complex routing of the coolant through the gun frame. The design of electrode adapter 38 can allow the in and out ports in the adapter main body portion 38a to communicate directly with the central bore in the adapter as well as with the central tube to simplify electrode construction and provide a more direct routing of the in and out coolant, thereby avoiding complex routing of the coolant though the gun frame.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A weld gun for performing a welding operation on a workpiece comprising:
a pair of opposing arms, at least one arm movable relative to the opposing arm to apply pressure to the workpiece during a welding operation; and
an actuator for moving at least one arm relative to the opposing arm.

2. The weld gun of claim 1 further comprising:
the actuator being interchangeable.

3. The weld gun of claim 2 further comprising:
the interchangeable actuator selected from a group consisting of a power cylinder and a servo motor.

4. The weld gun of claim 1 further comprising:
a guide block connected to one of the opposing arms, the guide block having a non-circular aperture formed therein; and
an electrode adapter having a non-cylindrical rod portion slidably received in the non-circular aperture formed in the guide block for preventing rotation of the electrode adapter.

5. The weld gun of claim 4 further comprising:
the rod portion chrome treated for enhancing work characteristics and for rejecting weld splatter.

6. The weld gun of claim 4 further comprising:
the guide block having a rectangular aperture; and
the electrode adapter having a rectangular rod portion slidably received in the rectangular aperture formed in the guide block.

7. The weld gun of claim 4 further comprising:
the guide block having a square aperture; and
the electrode adapter having a square rod portion slidably received in the square aperture formed in the guide block.

8. The weld gun of claim 1 further comprising:
a pair of side plates for supporting components of the weld gun to establish critical dimensions of the components relative to one another, while preventing tolerance buildup of critical dimensions at critical points.

9. The weld gun of claim 8 further comprising:
the side plates being identical to one another.

10. The weld gun of claim 8 further comprising:
the side plates being a mirror image of one another.

11. The weld gun of claim 8 further comprising:
the side plates being interchangeable for readily reconfiguring into a different structural configuration to accommodate different welding requirements while allowing use of common components supported by the side plates in each configuration.

12. The weld gun of claim 1 further comprising:
an electrode holder sandwiched between insulating plates allowing a metal-to-metal configuration at arm engagement of the electrode holder to prevent rotation of the electrode during use.

13. The weld gun of claim 1 further comprising:
dual attachment points of the electrode adapter to allow for a new attachment point after either a wear failure or electrical arcing failure.

14. The weld gun of claim 1 further comprising:
dual attachment points of the shunt adapter to allow for a new attachment point after either a wear failure or electrical arcing failure.

15. The weld gun of claim 1 further comprising:
an electrode adapter connected to one of the opposing arms; and
a hose fitting attachable directly to a rear end of the electrode adapter.

16. The weld gun of claim 15 further comprising:
a tube positioned within the electrode adapter and coacting with the hose fitting for simplifying an inlet water port and an outlet water port to the electrode adapter.

17. The weld gun of claim 16 further comprising:
the inlet water port and outlet water port in the electrode adapter communicating directly with a central bore in the adapter and with the central tube for providing a routing of coolant directly through only the electrode adapter.

18. A weld gun for performing a welding operation on a workpiece comprising:
a pair of opposing arms, at least one arm movable relative to the opposing arm to apply pressure to the workpiece during a welding operation;
a pair of side plates for supporting components of the weld gun to establish critical dimensions of the components relative to one another, while preventing tolerance buildup of critical dimensions at critical points;
a guide block connected to one of the opposing arms, the guide block having a non-circular aperture formed therein;
an electrode adapter having a non-cylindrical rod portion slidably received in the non-circular aperture formed in the guide block for preventing rotation of the electrode adapter; and
a hose fitting attachable directly to a rear end of the electrode adapter for communicating with an inlet water port and an outlet water port formed in the electrode adapter for providing a routing of coolant directly through the electrode adapter only.

19. The weld gun of claim 18 further comprising:
an interchangeable actuator for moving at least one of the opposing arms relative to the opposing arm, the interchangeable actuator selected from a group consisting of a power cylinder and a servo motor.

20. The weld gun of claim 18 further comprising:
an electrode holder sandwiched between insulating plates allowing a metal-to-metal configuration at electrode arm engagement with the electrode holder to prevent rotation of the electrode arm during use.

21. The weld gun of claim 18 further comprising:
dual attachment points of the electrode adapter and shunt adapter to allow for a new attachment point after either a wear failure or electrical arcing failure.

22. The weld gun of claim 18 further comprising:
the side plates being identical to one another.

23. The weld gun of claim 18 further comprising:
the side plates being a mirror image of one another.
